# EUROPÄISCHE PATENTSCHRIFT

(11) **EP 3 863 885 B1**
(45) Veröffentlichungstag und Bekanntmachung des Hinweises auf die Patenterteilung: **11.10.2023**
(21) Anmeldenummer: 19787207.0
(22) Anmeldetag: 11.10.2019
(51) Int. Cl.: B60N 2/02, B60N 2/16, B60N 2/50, G05G 1/04, G05G 5/26

(54) **BEDIENEINHEIT ZUR VORGABE EINES SOLLWERTES FÜR EINE HÖHENEINSTELLVORRICHTUNG SOWIE FAHRZEUGSITZ**
OPERATING UNIT FOR SPECIFYING A DESIRED VALUE FOR A HEIGHT ADJUSTMENT APPARATUS, AND VEHICLE SEAT
UNITÉ DE COMMANDE POUR LA DÉFINITION D'UNE VALEUR THÉORIQUE POUR UN DISPOSITIF DE RÉGLAGE EN HAUTEUR AINSI QUE SIÈGE DE VÉHICULE

(30) Priorität: 12.10.2018 DE 102018125275
(43) Veröffentlichungstag der Anmeldung: 18.08.2021
(73) Patentinhaber: Adient US LLC, Plymouth, MI 48170 (US)
(72) Erfinder: ANTES, Felix, 67685 Erzenhausen (DE); HOFFMANN, Jan, 67727 Lohnsfeld (DE)
(74) Vertreter: Liedhegener, Ralf
(86) Internationale Anmeldenummer: PCT/EP2019/077557
(87) Internationale Veröffentlichungsnummer: WO 2020/074684

(56) Entgegenhaltungen:
- EP-A2- 2 583 861
- DE-A1-102010 026 015

## Beschreibung

Die Erfindung betrifft eine Bedieneinheit zur Vorgabe eines Sollwertes für eine Höheneinstellvorrichtung eines Fahrzeugsitzes, insbesondere Nutzfahrzeugsitz, wobei die Bedieneinheit zur Betätigung der Höheneinstellvorrichtung ein um eine Achse schwenkbares Bedienelement aufweist, sowie einen Fahrzeugsitz.

### Stand der Technik

Aus der DE 10 2008 013 794 B3 ist ein Fahrzeugsitz, insbesondere ein Nutzfahrzeugsitz, bekannt, mit einem Scherengestell, welches schwingfähig und höheneinstellbar ist, mit einer Gasdruckfeder und wenigstens einem Paar von Schwingen, welche sich an einer Scherenachse kreuzen, und einer Steuereinrichtung zur Niveauregulierung und zur Höheneinstellung des Scherengestells. Die Steuereinrichtung umfasst eine Ventileinrichtung mit Ventilen zur Ansteuerung der Gasdruckfeder, eine Steuerkulisse und ein Tastorgan zum Abtasten der Steuerkulisse, wobei die Steuerkulisse und das Tastorgan verschiedenen, relativ zu einander beweglichen Teilen des Scherengestells kinematisch zugeordnet sind. Die Steuerkulisse und die Ventileinrichtung sind einer ersten Schwinge und das Tastorgan einer zweiten Schwinge kinematisch zugeordnet. Die Steuerkulisse ist um eine Schwenkachse schwenkbar und zur Betätigung der Ventileinrichtung angeordnet. Zur Änderung der Höhe des Scherengestells, und damit der Höhe des Fahrzeugsitzes, wird das Tastorgan relativ zur Scherenachse mittels eines Seilzuges verdreht. Dadurch betätigt das Tastorgan die Steuerkulisse, wodurch die Ventileinrichtung die Gasdruckfeder solange belüftet oder entlüftet, bis die gewünschte Höhe erreicht ist.

Das Verdrehen des Tastorgans mittels des Seilzuges kann durch einen Rastschalter erfolgen, wie dieser beispielsweise aus der DE 10 2011 014 234 A1 bekannt ist. Dieser Rastschalter ermöglicht die Vorgabe eines Sollwertes und umfasst eine Rastbahn mit mehreren Rasten, einen um eine Achse schwenkbaren Hebel und mindestens ein Rastelement, welches durch Eingriff in eine Raste den Rastschalter in einer diskreten Rastposition festlegt, wobei das Rastelement federartig ausgebildet ist.

Aus der DE 10 2010 026 015 B4 ist ein Fahrzeugsitz, insbesondere Nutzfahrzeugsitz, bekannt, mit einem mittels einer Gasfeder schwingfähigen und höheneinstellbaren Sitzgestell, und einem Regler, der den Istwert der Höhe des Sitzgestells erfasst. Der Regler weist eine Seilrolle, welche an einem ersten Teil des Sitzgestells um eine Achse drehbar gelagert ist, und ein Seil, welches wenigstens teilweise auf die Seilrolle aufwickelbar, von dieser abwickelbar und an einem relativ zum ersten Teil beweglichen zweiten Teil des Sitzgestells befestigt ist, auf. Der Regler steuert in Abhängigkeit eines Sollwertes der Höhe des Sitzgestells wenigstens ein Steuerventil der Gasfeder an. Ein Getriebe schafft eine Wirkverbindung, insbesondere Getriebeverbindung, zwischen der Seilrolle, einem Sollwertgeber, mittels dessen der Sollwert der Höhe des Sitzgestells einstellbar ist, und einer Steuervorrichtung, welche das wenigstens eine Steuerventil ansteuert. Das Getriebe ist als Planetengetriebe ausgebildet. Das Getriebe weist ein Sonnenrad, welches um die Achse drehbar gelagert ist, wenigstens ein Planetenrad, welches mit dem Sonnenrad kämmt und welches auf einem Steg drehbar gelagert ist, und ein Hohlrad, welches um die Achse drehbar gelagert ist und welches mit dem wenigstens einen Planetenrad kämmt, auf. Das Sonnenrad ist mit der Seilrolle und/oder das Hohlrad mit dem Sollwertgeber und/oder der Steg mit der Steuervorrichtung verbunden.

Aus der EP 2 583 861 A2 ist eine Vorrichtung zur Verstellung einer Höhe eines Sitzes eines Fahrzeugs bekannt, mit einem Höhenverstellhebel, der mit einer Getriebezahnstruktur mit einem Höhenverstelldrehzapfen in Eingriff steht und eine in Eingriff stehende Struktur des Getriebezahns mit Hilfe von Aufwärts- und Abwärtsdrehungen verändert, einem Höhenverstellkabel, das in eine Kabeleinführnut eingeführt ist, die an einer Innenseitenfläche des Höhenverstellhebels gebildet ist, und sich mit Hilfe der Aufwärts- und Abwärtsdrehungen des Höhenverstellhebels längs einer Kabelführung dreht, und einem Rotor, der mit dem Höhenverstellkabel verbunden ist, um dadurch je nach der Drehrichtung des Höhenverstellkabels wahlweise einen Lufteinlassstift oder einen Luftauslassstift eines Steuerventils mit Druck zu beaufschlagen und eine Luftmenge in einem Innenraum einer Luftfeder einzustellen, die mit dem Steuerventil verbunden ist und die Höhe des Sitzes verstellt, wobei der Rotor eine Armstange, die je nach der Drehung des Höhenverstellhebels vom Höhenverstellkabel geschoben oder gezogen wird und durch eine Schub- oder Zugbetätigung des Höhenverstellkabels verdreht wird, und eine Schubstange, die mit einer drehenden Welle der Armstange in Eingriff steht und je nach der Drehung der Armstange den Lufteinlassstift bzw. den Luftauslassstift des Steuerventils mit Druck beaufschlagt, umfasst.

### Aufgabe

Der Erfindung liegt die Aufgabe zu Grunde, eine Bedieneinheit zur Vorgabe eines Sollwertes für eine Höheneinstellvorrichtung eingangs genannter Art zu verbessern, insbesondere eine geräuscharme Betätigung der Bedieneinheit zu ermöglichen, sowie einen entsprechenden Fahrzeugsitz bereitzustellen.

### Lösung

Diese Aufgabe wird erfindungsgemäß gelöst, durch eine Bedieneinheit zur Vorgabe eines Sollwertes für eine Höheneinstellvorrichtung eines Fahrzeugsitzes, insbesondere Nutzfahrzeugsitz, wobei die Bedieneinheit zur Betätigung der Höheneinstellvorrichtung ein um eine Achse schwenkbares Bedienelement aufweist, und das Bedienelement stufenlos einstellbar ist, wobei die Bedieneinheit ein Halteelement und zwei Gleitelemente aufweist, wobei ein erstes der beiden Gleitelemente mit dem Halteelement verbunden ist.

Dadurch, dass das Bedienelement stufenlos einstellbar ist, ist es ermöglicht, dass eine Einstellung mittels der Bedieneinheit ohne eine negativen Geräuschkulisse stufenlos durchführbar ist.

Vorteilhafte Ausgestaltungen, welche einzeln oder in Kombination miteinander eingesetzt werden können, sind Gegenstand der Unteransprüche.

Die Höheneinstellvorrichtung kann eine Höheneinstellkinematik sein. Die Höheneinstellkinematik kann ein Scherengestell umfassen.

Das Halteelement kann mit einem Rahmenteil eines Fahrzeugsitzes, insbesondere einem Sitzrahmenseitenteil, verbindbar sein. Das Halteelement kann einen Halteabschnitt zur Befestigung eines Bowdenzuges, insbesondere einer Hülle eines Bowdenzuges, aufweisen.

Die Bedieneinheit weist ein erstes Gleitelement und ein zweites Gleitelement auf. Die Gleitelemente können jeweils im Wesentlichen halbzylindrisch ausgestaltet sein. Die Gleitelemente können gemeinsam einen im Wesentlichen zylindrischen Raum einnehmen, welcher sich axial relativ zu einer Achse erstreckt.

Die Gleitelemente können auf einer äußeren Oberfläche beschichtet sein. Eine Beschichtung der Gleitelemente kann eine vorgegebene Haftreibung auf der Oberfläche der Gleitelemente bewirken. Das erste der beiden Gleitelemente kann fest mit dem Halteelement verbunden sein. Das erste Gleitelement kann mittels mindestens zweier Stifte fest mit dem Halteelement verbunden sein. Das erste Gleitelement kann drehfest mit dem Halteelement verbunden sein.

Die Gleitelemente können jeweils wenigstens eine Buchse aufweisen. Eines der beiden Gleitelemente, insbesondere das erste Gleitelement, kann zwei Buchsen aufweisen. Die Buchsen können mit Spielpassung in das jeweils andere Gleitelement, insbesondere das zweite Gleitelement, einführbar sein. Die Gleitelemente können mittels der Buchsen relativ zueinander linear verschiebbar gelagert sein. Die Gleitelemente können mittels der Buchsen relativ zueinander und in radialer Richtung zur Achse linear verschiebbar sein. Die Buchsen können ein Verdrehen der Gleitelemente relativ zueinander verhindern. Die beiden Gleitelemente können mittels eines Federelements, insbesondere einer Druckfeder, vorgespannt sein. Die beiden Gleitelemente können mit einer Federkraft voneinander weg beaufschlagt sein. Die beiden Gleitelemente können mit einer Federkraft in radialer Richtung relativ zur Achse voneinander weg beaufschlagt sein.

Die Bedieneinheit kann einen Zentrierkörper aufweisen. Der Zentrierkörper kann im Wesentlichen hohlzylindrisch ausgestaltet sein. Der Zentrierkörper kann einen hohlzylindrischen Abschnitt aufweisen. Der Zentrierkörper, insbesondere im Bereich des hohlzylindrischen Abschnitts, kann auf einer Innenseite beschichtet sein. Der Zentrierkörper kann auf einer Außenseite eine erste Hälfte einer Steckverbindung zur Befestigung des Bedienelements aufweisen. Das Bedienelement kann auf den Zentrierkörper aufgesteckt und mittels der Steckverbindung gehalten sein. Das Bedienelement kann auf den Zentrierkörper aufgeclipst sein. Die Gleitelemente können im hohlzylindrischen Abschnitt angeordnet sein. Der Zentrierkörper kann im Bereich des hohlzylindrischen Abschnitts eine Innenfläche aufweisen.

Die Oberflächen der Gleitelemente können mittels zweier Federelemente, insbesondere zweier Druckfedern, an die Innenfläche des im Wesentlichen hohlzylindrischen Zentrierkörpers anpressbar sein. Das Bedienelement kann mittels Haftreibung bei Belastung in der jeweils eingestellten Position gehalten sein. Durch manuelle Betätigung kann die Haftreibung überwunden werden und ein abweichender Sollwert mittels des Bedienelements einstellbar sein.

Der Zentrierkörper kann durch die Verspannung zwischen den beiden Gleitelementen um eine Achse selbstzentrierend gelagert sein. Diese Achse entspricht zugleich einer Drehachse des Bedienelements.

Diese Aufgabe wird ferner erfindungsgemäß gelöst, durch einen Fahrzeugsitz, insbesondere Nutzfahrzeugsitz, mit einer Bedieneinheit zur Vorgabe eines Sollwertes für eine Höheneinstellvorrichtung des Fahrzeugsitzes gemäß der vorhergehenden Beschreibung.

### Figuren und Ausführungsformen der Erfindung

Bevor nachfolgend Ausgestaltungen der Erfindung eingehender an Hand von Zeichnungen beschrieben werden, ist zunächst festzuhalten, dass die Erfindung nicht auf die beschriebenen Komponenten beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Darstellung eines Fahrzeugsitzes,
- Fig. 2:: eine Schnittdarstellung eines gattungsgemäßen Rastschalters,
- Fig. 3:: eine Explosionsdarstellung einer erfindungsgemäßen Bedieneinheit gemäß eines ersten Ausführungsbeispiels,
- Fig. 4:: eine Darstellung der zusammengesetzten Bedieneinheit von Fig. 3 mit einem Bowdenzug,
- Fig. 5:: schematisch eine erfindungsgemäße Bedieneinheit gemäß eines zweiten Ausführungsbeispiels,
- Fig. 6:: schematisch ein Gleitelement der Bedieneinheit gemäß des zweiten Ausführungsbeispiels,
- Fig. 7:: eine Darstellung zweier Gleitelemente zusammen mit zwei Federelementen der Bedieneinheit gemäß des zweiten Ausführungsbeispiels,
- Fig. 8:: eine Darstellung der zwei Gleitelemente von Fig. 7 vor einer Montage in einen Zentrierkörper der Bedieneinheit gemäß des zweiten Ausführungsbeispiels,
- Fig. 9:: eine Darstellung des Zentrierkörpers von Fig. 8 vor einer Montage in ein Halteelement der Bedieneinheit gemäß des zweiten Ausführungsbeispiels, und
- Fig. 10:: eine Darstellung der Bedieneinheit gemäß des zweiten Ausführungsbeispiels, vor einer Montage eines Bedienelements.

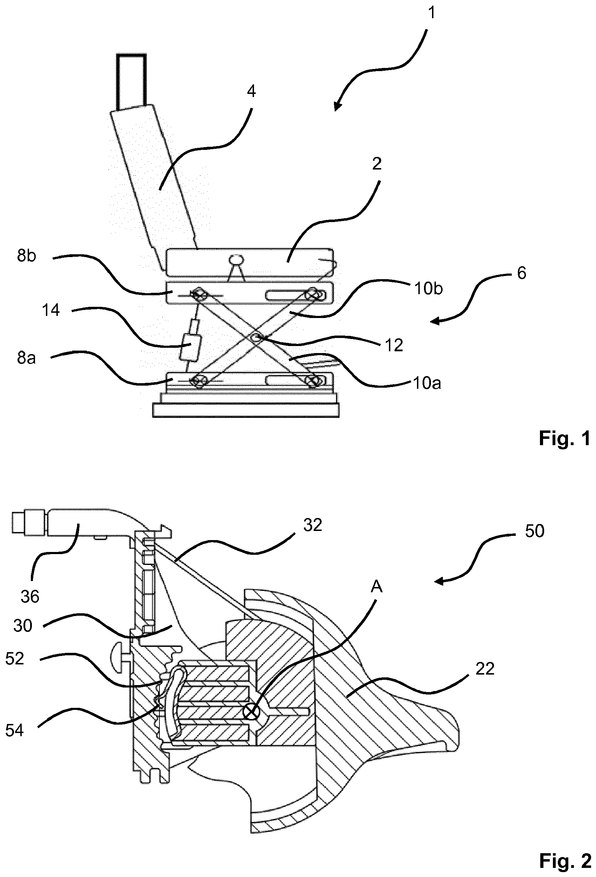

Ein in Fig. 1 gezeigter Fahrzeugsitz 1 für ein Nutzfahrzeug weist ein Höheneinstellkinematik 6 auf, welche einen Unterrahmen 8a, einen oberhalb dessen angeordneten Oberrahmen 8b und beidseitig je ein Paar gekreuzter erster Schwingen 10a und zweiter Schwingen 10b umfasst. Ein Querrohr 12 verbindet die beiden Kreuzungspunkte und definiert zugleich eine Scherenachse, um welche die Schwingen 10a, 10b relativ zueinander schwenken können. Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Die verwendeten Positions- und Richtungsangaben, wie beispielsweise vorne, hinten, oben und unten beziehen sich jeweils auf eine Blickrichtung eines in einem Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrechtstehender Lehne 4 und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Die ersten Schwingen 10a sind an ihren hinteren Enden mittels eines Halterrohrs miteinander verbunden und an dem Oberrahmen 8b angelenkt. An ihren vorderen Enden sind die ersten Schwingen 10a mittels eines Lagerrohrs verbunden und beidseitig mittels je einer Lagervorrichtung in dem Unterrahmen 8a in Längsrichtung, welche annähernd der Fahrtrichtung entspricht, beweglich geführt.

Die zweiten Schwingen 10b sind an ihren hinteren Enden mittels eines Halterrohrs miteinander verbunden und an dem Unterrahmen 8a angelenkt. An ihren vorderen Enden sind die zweiten Schwingen 10b ebenfalls mittels eines Lagerrohrs verbunden und beidseitig mittels je einer Lagervorrichtung in dem Oberrahmen 8b in Längsrichtung beweglich geführt.

Das Querrohr 12, die Lagerrohre und die Halterohre erstrecken sich vorliegend in Querrichtung, ebenso wie die Scherenachse. Durch eine Schwenkbewegung der ersten Schwingen 10a relativ zu den zweiten Schwingen 10b um die Scherenachse ändert sich die Höhe des Oberrahmens 8b über dem Unterrahmen 8a, im Folgenden kurz als Höhe der Höheneinstellkinematik bezeichnet. Mittels einer Gasfeder 14 und vorzugsweise einem hier nicht dargestellten Dämpfer wird die Höheneinstellkinematik ein schwingfähiges System, welches den Sitzkomfort maßgeblich erhöht.

In Fig. 2 ist ein Schnitt durch einen gattungsgemäßen Rastschalter 50 gezeigt, welcher zur Vorgabe eines Sollwertes für eine Steuereinrichtung dient. Eine solche Steuervorrichtung ist beispielsweise aus der DE 10 2008 013 794 B3 bekannt und dient zur Regulierung der Sitzhöhe eines Fahrzeugsitzes.

Der Rastschalter 50 umfasst ein Halteelement 30, an welcher eine Kulisse 52 ausgebildet ist, die mehrere Rasten aufweist. Die Kulisse 52 ist in Form eines Segments eines Hohlrades ausgebildet, wobei die Rasten an der Innenfläche dieses Hohlradsegments ausgebildet sind und radial nach innen weisen. Die Rasten sind in äquidistanten Abständen zueinander angeordnet. Das Halteelement 30 umfasst zwei Lagerstellen, in welchen ein Bedienelement 22 drehbar gelagert ist. Dabei fluchten die Mittelachsen der Lagerstellen und bilden eine Achse A, um welche das Bedienelement 22 relativ zum Halteelement 30 und relativ zur Kulisse 52 schwenkbar ist.

Das Bedienelement 22 weist an seinem dem Halteelement 30 zugewandten Ende einen Rastbereich auf, an welchem vorliegend zwei Formfedern 54 befestigt sind. Die Formfedern 54 sind als separate Bauteile ausgeführt und formschlüssig mit dem Bedienelement 22 verbunden. Jede Formfeder 54 ist in Form einer Schenkelfeder ausgebildet. Die Formfedern 54 weisen an ihrem der Kulisse 52 zugewandten Ende eine Rastnase auf, welche bezüglich der Achse A radial nach außen absteht und in eine Raste der Kulisse 52 eingreift.

Das Halteelement 30 weist einen Halteabschnitt 36 auf, in welchem ein erstes Ende eines Bowdenzuges 32 gehalten ist. In Abhängigkeit von der Rastposition, in welcher der Rastschalter festgelegt ist, wird mittels des Bowdenzugs 32 ein Sollwert für die Sitzhöhe des Fahrzeugsitzes an besagte Steuereinheit vorgegeben.

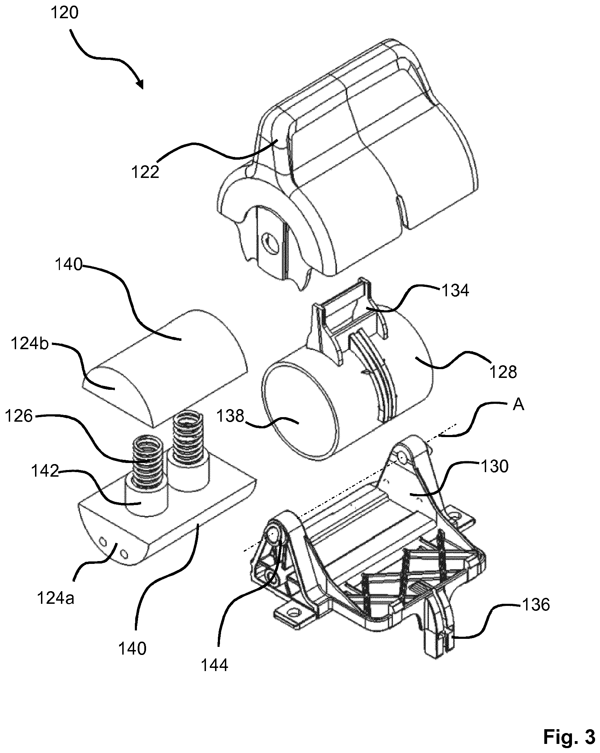

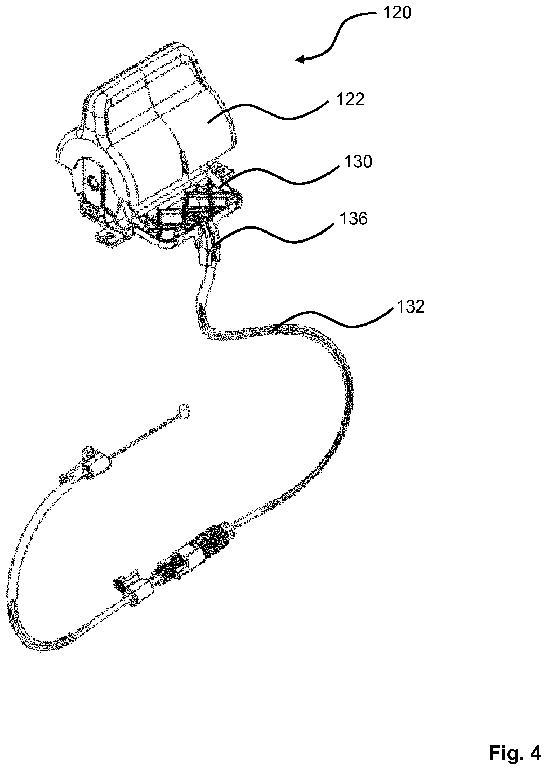

In den Figuren 3 und 4 ist die erfindungsgemäße Bedieneinheit 120 gemäß eines ersten Ausführungsbeispiels gezeigt. Die Bedieneinheit 120 weist ein Halteelement 130 auf. Das Halteelement 130 ist mit einem Rahmenteil eines Fahrzeugsitzes 1, insbesondere einem Sitzrahmenseitenteil, verbindbar. Das Halteelement 130 weist einen Halteabschnitt 136 zur Befestigung eines Bowdenzuges 132, insbesondere einer Hülle des Bowdenzuges 132, auf.

Die Bedieneinheit 120 weist zwei Gleitelemente 124a, 124b auf. Die Gleitelemente 124a, 124b sind jeweils im Wesentlichen halbzylindrisch ausgestaltet. Die Gleitelemente 124a, 124b nehmen gemeinsam einen im Wesentlichen zylindrischen Raum ein, welcher sich axial relativ zu einer Achse A erstreckt.

Die Gleitelemente 124a, 124b können auf einer äußeren Oberfläche 140 beschichtet sein. Das Gleitelement 124a ist fest mit dem Halteelement 130 verbunden. Das Gleitelement 124a ist bevorzugt mittels nicht dargestellter Stifte mit dem Halteelement 130 drehfest verbunden. Das Gleitelement 124a weist zwei Buchsen 142 auf. Die Buchsen 142 sind mit Spielpassung in das andere Gleitelement 124b einführbar. Die Gleitelemente 124a, 124b sind mittels der Buchsen 142 relativ zueinander und in radialer Richtung zur Achse A linear verschiebbar. Die Gleitelemente 124a, 124b sind mittels der Buchsen 142 gegen ein Verdrehen relativ zueinander gesichert. Die beiden Gleitelemente 124a, 124b sind mittels eines Federelements 126, vorliegend zweier Federelemente 126, vorgespannt. Die Federelemente 126 sind Druckfedern. Die beiden Gleitelemente 124a, 124b sind mit einer Federkraft in radialer Richtung relativ zur Achse A voneinander weg beaufschlagt.

Die Bedieneinheit 120 weist einen Zentrierkörper 128 auf. Der Zentrierkörper 128 ist im Wesentlichen hohlzylindrisch ausgestaltet. Der Zentrierkörper 128 weist einen hohlzylindrischen Abschnitt auf. Der Zentrierkörper 128 weist auf einer Außenseite eine Aufnahme 134 zur Befestigung einer Seele des Bowdenzuges 132 auf. Der Zentrierkörper 128 weist auf einer Außenseite ferner eine erste Hälfte einer Steckverbindung zur Befestigung des Bedienelements 122 auf. Das Bedienelement 122 ist auf den Zentrierkörper 128 aufgesteckt und mittels einer Clipsverbindung gehalten. Das Bedienelement 122 ist auf zwei axial nach außen orientierten Achsbolzen 144 an dem Halteelement 130 gelagert, insbesondere drehbar gelagert.

Zum leichteren Aufstecken des Bedienelements 122 sind die Achsbolzen 144 entgegen einer Aufsteckrichtung angefast. Die erste Hälfte der Steckverbindung und die Aufnahme 134 zur Befestigung des Bowdenzuges 132 sind vorliegend gemeinsam ausgestaltet.

Die Gleitelemente 124a, 124b sind innerhalb des hohlzylindrischen Abschnitts angeordnet. Der Zentrierkörper 128 weist im Bereich des hohlzylindrischen Abschnitts eine Innenfläche 138 auf. Die Oberfläche 140 der Gleitelemente 124a, 124b sind mittels des Federelemente 126 an die Innenfläche 138 des Zentrierkörpers 128 anpressbar. Das Bedienelement 122 ist mittels Haftreibung zwischen den Oberflächen 140 der Gleitelemente 124a, 124b und Innenfläche 138 des Zentrierkörpers 128 in der jeweils eingestellten Position gehalten. Durch manuelle Betätigung ist die Haftreibung überwindbar und ein geänderter Sollwert mittels des Bedienelements 122 einstellbar. Der Zentrierkörper 128 ist durch die Verspannung an den beiden Gleitelementen 124a, 124b um eine Achse A selbstzentrierend gelagert. Diese Achse A entspricht zugleich einer Drehachse des Bedienelements 122.

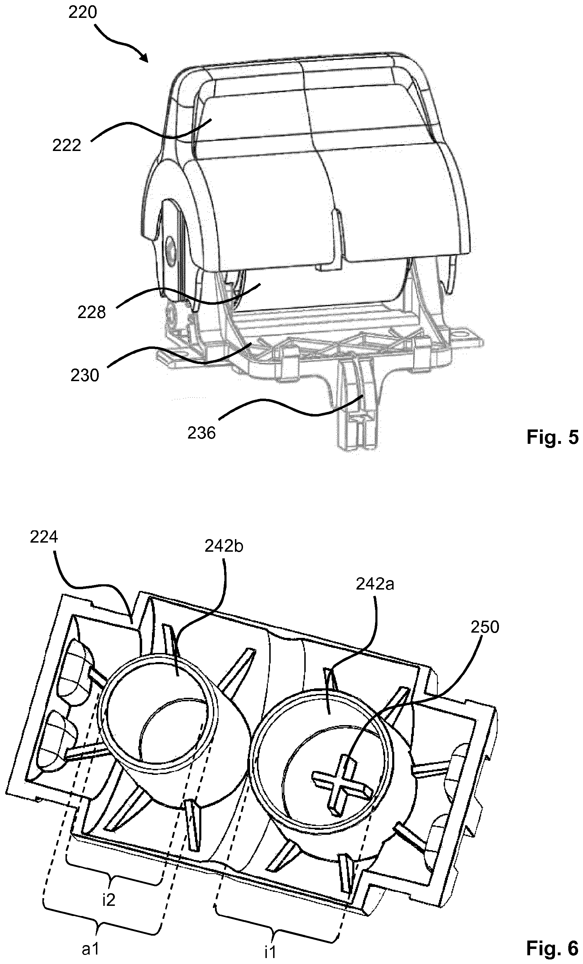

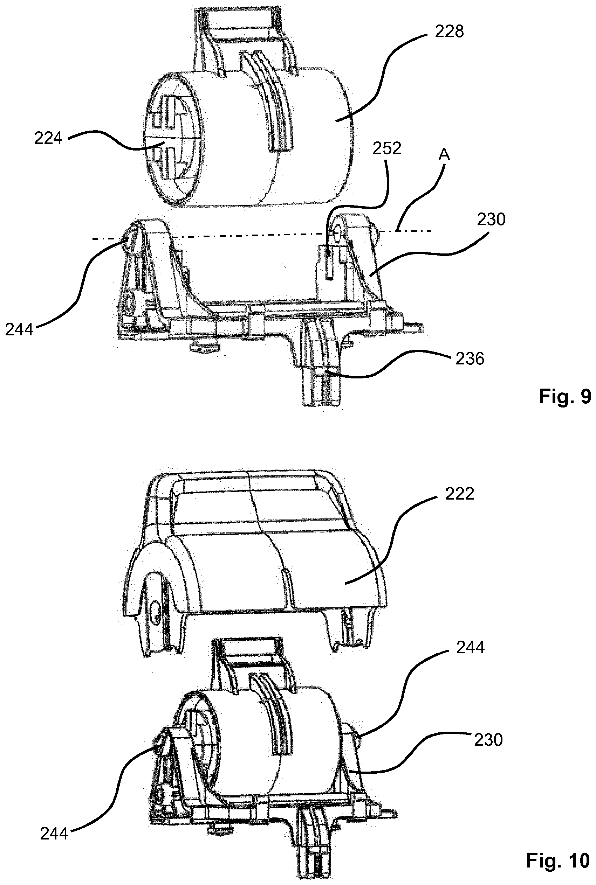

In den Figuren 5 bis 10 ist eine erfindungsgemäße Bedieneinheit 220 gemäß eines zweiten Ausführungsbeispiels gezeigt, welche, sofern nicht explizit abweichend beschrieben, im Wesentlichen der Bedieneinheit 120 gemäß des ersten Ausführungsbeispiels entspricht. Ähnliche oder identische Teile wie beim ersten Ausführungsbeispiel tragen dabei jeweils ein um 100 erhöhtes Bezugszeichen.

Die Bedieneinheit 220 weist ein Halteelement 230 auf. Das Halteelement 230 ist mit einem Rahmenteil eines Fahrzeugsitzes 1, insbesondere einem Sitzrahmenseitenteil, verbindbar. Das Halteelement 230 weist einen Halteabschnitt 236 zur Befestigung eines Bowdenzuges, insbesondere einer Hülle des Bowdenzuges, auf. Die Bedieneinheit 220 weist einen Zentrierkörper 228 auf. Der Zentrierkörper 228 ist im Wesentlichen hohlzylindrisch ausgestaltet. Der Zentrierkörper 228 weist einen hohlzylindrischen Abschnitt auf. Der Zentrierkörper 228 weist auf einer Außenseite eine in der Darstellung von Fig. 5 verdeckte Aufnahme 234 zur Befestigung einer Seele des Bowdenzuges auf. Der Zentrierkörper 228 weist auf einer Außenseite ferner eine erste Hälfte einer Steckverbindung zur Befestigung des Bedienelements 222 auf. Das Bedienelement 222 ist auf den Zentrierkörper 228 aufgesteckt und mittels der Steckverbindung gehalten. Die erste Hälfte der Steckverbindung und die Aufnahme 234 zur Befestigung des Bowdenzuges sind vorliegend gemeinsam ausgestaltet. Die Bedieneinheit 220 gemäß des zweiten Ausführungsbeispiels entspricht betreffend die Verbindung und die Wechselwirkung mit dem Bowdenzug im Wesentlichen der Bedieneinheit 120 gemäß des ersten Ausführungsbeispiels.

Fig. 6 zeigt ein Gleitelement 224 der Bedieneinheit 220. Die Bedieneinheit 220 weist zwei solche Gleitelemente 224 auf, welche als Gleichteile ausgestaltet sind. Die Gleitelemente 224 weisen jeweils eine im Wesentlichen halbzylindrische Außenfläche auf. Die Gleitelemente 224 nehmen gemeinsam einen im Wesentlichen zylindrischen Raum ein, wenn diese entsprechend zusammengeführt sind. Dieser zylindrische Raum erstreckt sich axial relativ zur Achse A.

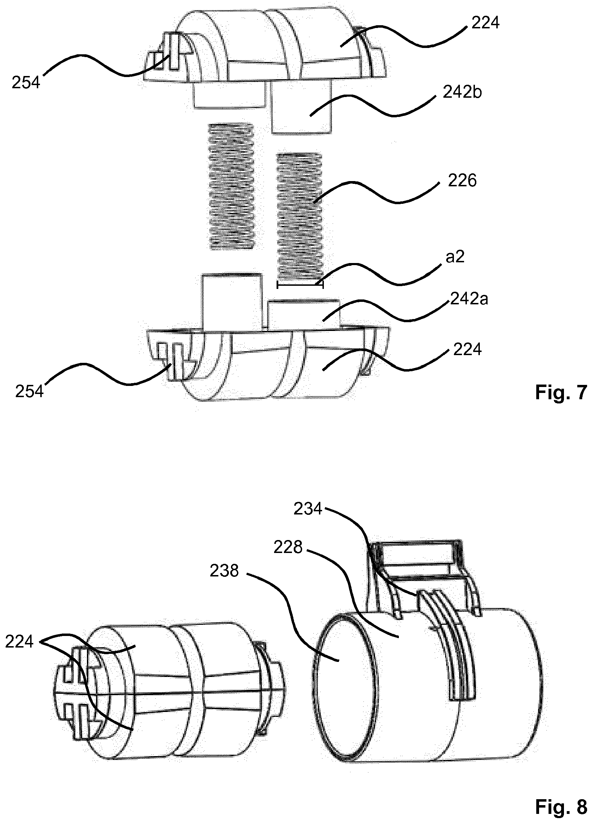

Die Gleitelemente 224 können als Spritzgussteile gefertigt sein. Die Gleitelemente 224 können auf einer äußeren Oberfläche 240 beschichtet sein. Die Gleitelemente 224 weisen auf einer Innenseite zwei zylindrische Buchsen 242a, 242b auf, insbesondere eine erste Buchse 242a und eine zweite Buchse 242b. Die erste Buchse 242a weist einen Innendurchmesser i1 auf. In einem Bodenbereich der ersten Buchse 242a ist ein Zentrierstift 250 angeordnet. Der Zentrierstift 250 kann kreuzförmig ausgestaltet sein. Der Zentrierstift 250 dient einer zentrierenden Lagerung eines ersten Endes eines in Fig. 7 dargestellten Federelements 226.

Die zweite Buchse 242b weist einen Außendurchmesser a1 auf. Die zweite Buchse 242b weist einen Innendurchmesser i2 auf. Der Außendurchmesser a1 der zweiten Buchse 242b ist derart auf den Innendurchmesser i1 der ersten Buchse 242a abgestimmt, das bei zusammengefügten zwei Gleitelementen 224 die zweite Buchse 242b einer jeden der beiden Gleitelemente 224 innerhalb der ersten Buchse 242a des jeweils anderen der beiden Gleitelemente 224 geführt ist. Die Gleitelemente 224 sind relativ zueinander und in radialer Richtung zur Achse A linear verschiebbar. Die Gleitelemente 224 sind mittels der Buchsen 242a, 242b gegen ein Verdrehen relativ zueinander gesichert. Durch die Abhängigkeit des Außendurchmessers a1 der jeweiligen zweiten Buchsen 242b und den jeweiligen Innendurchmessern i1 der ersten Buchsen 242a werden weiter Montagefehler vermieden, da nur eine funktionsfähige Verbindung der beiden Gleitelemente 224 miteinander ermöglicht ist. Dies ist in dem in Fig. 7 gezeigten Zustand verdeutlicht.

In den Figuren 7 bis 10 ist eine Reihe von Zuständen der jeweils dargestellten Bestandteile der Bedieneinheit 220 während des Zusammenbaus der Bedieneinheit 220 gezeigt.

Der Innendurchmesser i2 der zweiten Buchse 242b ist bevorzugt geringfügig größer als ein Außendurchmesser a2 des Federelements 226, wodurch das Federelement 226 in der jeweiligen zweiten Buchse 242b der beiden Gleitelemente 224 führbar ist.

Weiter von Vorteil und zur leichteren Unterscheidbarkeit kann es vorgesehen sein, dass die erste Buchse 242a und die zweite Buchse 242b eines jeweiligen Gleitelements 224 eine unterschiedliche Höhe aufweisen.

Die beiden Gleitelemente 224 sind mittels eines Federelements 226, vorliegend zweier Federelemente 226, vorgespannt. Die Federelemente 226 sind Druckfedern. Die beiden Gleitelemente 224 sind mit einer Federkraft in radialer Richtung relativ zur Achse A voneinander weg beaufschlagt.

Die beiden zusammengefügten Gleitelemente 224 sind dann in axialer Richtung in einen hohlzylindrischen Abschnitt des Zentrierkörpers 228 einführbar. Aufgrund der Federvorspannung der beiden Gleitelemente 224 gelangt die äußere Oberfläche 240 der Gleitelemente 224 mit der Innenfläche 238 des Zentrierkörpers 228 flächig in Kontakt.

An beiden in axialer Richtung orientierten Stirnseiten der Gleitelemente 224 ist ein erster Verbindungteil einer Nut-Feder-Verbindung ausgebildet. Vorliegend weisen die Gleitelemente 224 an ihren Stirnseiten jeweils eine Feder 254 auf. Das korrespondierende jeweilige andere Verbindungsteil der Nut-Feder-Verbindung, vorliegend eine Nut 252, ist an dem Halteelement 230 ausgebildet. Bei entsprechender Ausrichtung der Gleitelemente 224 sind die stirnseitig angeordneten Federn 254 der Gleitelemente 224 beim Zusammenfügen des Zentrierkörpers 228 und des Halteelements 230 in die korrespondierenden Nuten 252 des Halteelementes 230 einführbar werden. Die Federn 254 sichern das entsprechende Gleitelement 224 lediglich gegen ein Verdrehen in den Nuten 252 des Halteelements 230. Eine radiale Bewegung des entsprechenden Gleitelements 224 ist durch die lineare Führung der Federn 254 in den Nuten 252 weiterhin ermöglicht. Somit ist eines der beiden Gleitelemente 224 unmittelbar und das andere Gleitelement 224 mittelbar an dem Halteelement 230 gehalten.

Abschließend ist das Bedienelement 222 auf den Zentrierkörper 228 im Bereich der Aufnahme 234 und das Halteelement 230 aufgesteckt. Hierbei ist das Bedienelement 222 auf zwei axial nach außen orientierten Achsbolzen 244 an dem Halteelement 230 gelagert, insbesondere drehbar gelagert. Zum leichteren Aufstecken des Bedienelements 222 sind die Achsbolzen 244 entgegen einer Aufsteckrichtung angefast.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen

Offenbarung, den Figuren und den Ansprüchen, solange der resultierende Gegenstand zum Schutzumfang gehört, der durch die Ansprüche definiert ist.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 2: Sitzteil
- 4: Lehne
- 6: Höheneinstellkinematik
- 8a: Unterrahmen
- 8b: Oberrahmen
- 10a: erste Schwinge
- 10b: zweite Schwinge
- 12: Querrohr
- 14: Gasfeder
- 22: Bedienelement
- 30: Halteelement
- 32: Bowdenzug
- 36: Halteabschnitt
- 50: Rastschalter
- 52: Kulisse
- 54: Formfeder
- 120, 220: Bedieneinheit
- 122, 222: Bedienelement
- 124a: Gleitelement
- 124b: Gleitelement
- 126, 226: Federelement
- 128, 228: Zentrierkörper
- 130, 230: Halteelement
- 132: Bowdenzug
- 134, 234: Aufnahme
- 136, 236: Halteabschnitt
- 138, 238: Innenfläche
- 140, 240: Oberfläche
- 142: Buchse144, 244 Achsbolzen
- 224: Gleitelement
- 242a: Buchse
- 242b: Buchse
- 250: Zentrierstift
- 252: Nut
- 254: Feder
- a1: Außendurchmesser (der Buchse 242b)
- a2: Außendurchmesser (des Federelements 226)
- i1: Innendurchmesser (der Buchse 242a)
- i2: Innendurchmesser (der Buchse (242b)
- A: Achse

## Patentansprüche

1. Bedieneinheit (120; 220) zur Vorgabe eines Sollwertes für eine Höheneinstellvorrichtung eines Fahrzeugsitzes (1), insbesondere Nutzfahrzeugsitzes, wobei die Bedieneinheit (120; 220) zur Betätigung der Höheneinstellvorrichtung ein Bedienelement (122; 222) aufweist und das Bedienelement (122; 222) stufenlos einstellbar ist, wobei die Bedieneinheit (120; 220) ein Halteelement (130; 230) und zwei Gleitelemente (124a, 124b; 224) aufweist,
**dadurch gekennzeichnet, dass**
ein erstes der beiden Gleitelemente (124a; 224) mit dem Halteelement (130; 230) verbunden ist.

2. Bedieneinheit (120; 220) gemäß Anspruch 1, wobei das Halteelement (130; 230) mit einem Rahmenteil des Fahrzeugsitzes (1) verbindbar ist.

3. Bedieneinheit (120; 220) gemäß Anspruch 2, wobei das Halteelement (130; 230) mit einem Sitzrahmenseitenteil verbindbar ist.

4. Bedieneinheit (120; 220) gemäß einem der Ansprüche 1 bis 3, wobei die Gleitelemente (124a, 124b; 224) gemeinsam einen im Wesentlichen zylindrischen Raum einnehmen, welcher sich axial relativ zu einer Achse (A) erstreckt.

5. Bedieneinheit (120; 220) gemäß einem der Ansprüche 1 bis 4, wobei die Gleitelemente (124a, 124b; 224) auf einer äußeren Oberfläche (140; 240) beschichtet sind.

6. Bedieneinheit (120; 220) gemäß einem der Ansprüche 1 bis 5, wobei das erste der beiden Gleitelemente (124a; 224) drehfest mit dem Halteelement (130; 230) verbunden ist.

7. Bedieneinheit (120; 220) gemäß einem der Ansprüche 1 bis 6, wobei wenigstens eines der Gleitelemente (124a, 124b; 224) wenigstens eine Buchse (142; 242a, 242b) aufweist.

8. Bedieneinheit (120; 220) gemäß Anspruch 7, wobei die wenigstens eine Buchse (142; 242a, 242b) mit Spielpassung in das jeweils andere Gleitelement (124a, 124b; 224) einführbar ist.

9. Bedieneinheit (120; 220) gemäß einem der Ansprüche 7 oder 8, wobei die Gleitelemente (124a, 124b; 224) mittels der wenigstens einen Buchse (142; 242a, 242b) relativ zueinander, und insbesondere nach Anspruch 4 in radialer Richtung zur Achse (A), linear verschiebbar gelagert sind.

10. Bedieneinheit (120; 220) gemäß einem der Ansprüche 7 bis 9, wobei die wenigstens eine Buchse (142; 242a, 242b) ein Verdrehen der Gleitelemente (124a, 124b; 224) relativ zueinander verhindert.

11. Bedieneinheit (120; 220) gemäß einem der Ansprüche 1 bis 10, wobei die beiden Gleitelemente (124a, 124b; 224) mittels eines Federelements (126; 226), insbesondere einer Druckfeder, vorgespannt sind.

12. Bedieneinheit (120; 220) gemäß einem der Ansprüche 1 bis 11, wobei die Bedieneinheit (120; 220) einen Zentrierkörper (128; 228), insbesondere einen im Wesentlichen hohlzylindrisch ausgestalteten Zentrierkörper (128; 228), aufweist.

13. Bedieneinheit (120; 220) gemäß Anspruch 12, wobei der Zentrierkörper (128; 228) durch die Vorspannung der beiden Gleitelemente (124a, 124b; 224) um eine Achse (A) selbstzentrierend gelagert ist.

14. Bedieneinheit (120; 220) gemäß einem der Ansprüche 4 oder bte- 13, wobei die Achse (A) einer Drehachse des Bedienelements (122; 222) entspricht.

15. Fahrzeugsitz (1), insbesondere Nutzfahrzeugsitz, mit einer Bedieneinheit (120; 220) zur Vorgabe eines Sollwertes für eine Höheneinstellvorrichtung des Fahrzeugsitzes (1) nach einem der Ansprüche 1 bis 14.

## Claims

1. Operating unit (120; 220) for specifying a desired value for a height adjustment apparatus of a vehicle seat (1), in particular utility vehicle seat, wherein the operating unit (120; 220) has an operating element (122; 222) for actuating the height adjustment apparatus, and the operating element (122; 222) is continuously adjustable, wherein the operating unit (120; 220) has a holding element (130; 230) and two sliding elements (124a, 124b; 224), **characterized in that** a first of the two sliding elements (124a; 224) is connected to the holding element (130; 230).

2. Operating unit (120; 220) according to Claim 1, wherein the holding element (130; 230) is connectable to a frame part of the vehicle seat (1).

3. Operating unit (120; 220) according to Claim 2, wherein the holding element (130; 230) is connectable to a seat frame side part.

4. Operating unit (120; 220) according to one of Claims 1 to 3, wherein the two sliding elements (124a, 124b; 224) together take up a substantially cylindrical space which extends axially relative to an axis (A).

5. Operating unit (120; 220) according to one of Claims 1 to 4, wherein the sliding elements (124a, 124b; 224) are coated on an outer surface (140; 240).

6. Operating unit (120; 220) according to one of Claims 1 to 5, wherein the first of the two sliding elements (124a; 224) is connected to the holding element (130; 230) for conjoint rotation.

7. Operating unit (120; 220) according to one of Claims 1 to 6, wherein at least one of the sliding elements (124a, 124b; 224) has at least one bushing (142; 242a, 242b) .

8. Operating unit (120; 220) according to Claim 7, wherein the at least one bushing (142; 242a, 242b) can be introduced with a clearance fit into the respective other sliding element (124a, 124b; 224).

9. Operating unit (120; 220) according to either of Claims 7 and 8, wherein the sliding elements (124a, 124b; 224) are mounted by the at least one bushing (142; 242a, 242b) so as to be linearly displaceable relative to one another, and in particular, according to Claim 4, in the radial direction with respect to the axis (A).

10. Operating unit (120; 220) according to one of Claims 7 to 9, wherein the at least one bushing (142; 242a, 242b) prevents rotation of the sliding elements (124a, 124b; 224) relative to one another.

11. Operating unit (120; 220) according to one of Claims 1 to 10, wherein the two sliding elements (124a, 124b; 224) are prestressed by a spring element (126; 226), in particular a compression spring.

12. Operating unit (120; 220) according to one of Claims 1 to 11, wherein the operating unit (120; 220) has a centring body (128; 228), in particular a centring body (128; 228) of substantially hollow-cylindrical configuration.

13. Operating unit (120; 220) according to Claim 12, wherein the centring body (128; 228) is mounted so as to be self-centring about an axis (A) by the prestressing of the two sliding elements (124a, 124b; 224).

14. Operating unit (120; 220) according to either of Claims 4 and 13, wherein the axis (A) corresponds to an axis of rotation of the operating element (122; 222).

15. Vehicle seat (1), in particular utility vehicle seat, with an operating unit (120; 220) for specifying a desired value for a height adjustment apparatus of the vehicle seat (1) according to one of Claims 1 to 14.

## Revendications

1. Unité de commande (120 ; 220) pour la définition d'une valeur théorique pour un dispositif de réglage en hauteur d'un siège de véhicule (1), en particulier d'un siège de véhicule utilitaire, l'unité de commande (120 ; 220) présentant un élément d'actionnement (122 ; 222) pour l'actionnement du dispositif de réglage en hauteur et l'élément de commande (122 ; 222) étant réglable en continu, l'unité de commande (120 ; 220) présentant un élément de retenue (130 ; 230) et deux éléments de glissement (124a, 124b ; 224),
**caractérisée en ce**
**qu'**un premier des deux éléments de glissement (124a ; 224) est relié à l'élément de retenue (130 ; 230).

2. Unité de commande (120 ; 220) selon la revendication 1, l'élément de retenue (130 ; 230) pouvant être relié à une partie de cadre du siège de véhicule (1).

3. Unité de commande (120 ; 220) selon la revendication 2, l'élément de retenue (130 ; 230) pouvant être relié à une partie latérale de cadre de siège.

4. Unité de commande (120 ; 220) selon l'une des revendications 1 à 3, les éléments de glissement (124a, 124b ; 224) occupant ensemble un espace sensiblement cylindrique, lequel s'étend axialement par rapport à un axe (A).

5. Unité de commande (120 ; 220) selon l'une des revendications 1 à 4, les éléments de glissement (124a, 124b ; 224) étant revêtus sur une surface extérieure (140 ; 240) .

6. Unité de commande (120 ; 220) selon l'une des revendications 1 à 5, le premier des deux éléments de glissement (124a ; 224) étant relié de manière solidaire en rotation à l'élément de retenue (130 ; 230).

7. Unité de commande (120 ; 220) selon l'une des revendications 1 à 6, au moins l'un des éléments de glissement (124a, 124b ; 224) présentant au moins une douille (142 ; 242a, 242b).

8. Unité de commande (120 ; 220) selon la revendication 7, l'au moins une douille (142 ; 242a, 242b) pouvant être introduite dans l'autre élément de glissement (124a, 124b ; 224) respectif avec ajustement avec jeu.

9. Unité de commande (120 ; 220) selon l'une des revendications 7 ou 8, les éléments de glissement (124a, 124b ; 224) étant montés au moyen de l'au moins une douille (142 ; 242a, 242b) de manière déplaçable linéairement l'un par rapport à l'autre, et en particulier dans la direction radiale par rapport à l'axe (A) selon la revendication 4.

10. Unité de commande (120 ; 220) selon l'une des revendications 7 à 9, l'au moins une douille (142 ; 242a, 242b) empêchant une rotation des éléments de glissement (124a, 124b ; 224) l'un par rapport à l'autre.

11. Unité de commande (120 ; 220) selon l'une des revendications 1 à 10, les deux éléments de glissement (124a, 124b ; 224) étant précontraints au moyen d'un élément ressort (126 ; 226), en particulier un ressort de compression.

12. Unité de commande (120 ; 220) selon l'une des revendications 1 à 11, l'unité de commande (120 ; 220) présentant un corps de centrage (128 ; 228), en particulier un corps de centrage (128 ; 228) configuré de manière sensiblement cylindrique creuse.

13. Unité de commande (120 ; 220) selon la revendication 12, le corps de centrage (128 ; 228) étant monté avec centrage automatique autour d'un axe (A) par la précontrainte des deux éléments de glissement (124a, 124b ; 224).

14. Unité de commande (120 ; 220) selon l'une des revendications 4 ou 13, l'axe (A) correspondant à un axe de rotation de l'élément de commande (122 ; 222).

15. Siège de véhicule (1), en particulier siège de véhicule utilitaire, comportant une unité de commande (120 ; 220) pour la définition d'une valeur théorique pour un dispositif de réglage en hauteur du siège de véhicule (1) selon l'une des revendications 1 à 14.
